# EUROPEAN PATENT APPLICATION

(11) **EP 4 744 917 A1**
(43) Date of publication of application: **20.05.2026**
(21) Application number: 24840131.7
(22) Date of filing: 12.07.2024
(51) Int. Cl.: B60H 1/22, H05B 3/00, H05B 3/03, H05B 3/06

(54) **PTC HEATER HAVING TEMPERATURE SENSOR INSTALLED THEREIN**

(30) Priority: 13.07.2023 KR 20230091147; 21.08.2023 KR 20230109157
(71) Applicant: Woory Industrial Company, Ltd., Yongin-si, Gyeonggi-do 17088 (KR)
(72) Inventor: LEE, Yong Geun, Yongin-si, Gyeonggi-do 17088 (KR); KIM, Seung Myeon, Yongin-si, Gyeonggi-do 17088 (KR)
(74) Representative: Tetzner, Michael
(86) International application number: PCT/KR2024/010023
(87) International publication number: WO 2025/014321

(57) **Abstract**

The present invention relates to a PTC heater having a temperature sensor installed therein, the PTC heater comprising: at least one heat rod comprising a PTC element and electrodes; a plurality of heat fin assemblies installed on the two sides of the heat rod to transfer heat; and a housing coupled to at least one end of the heat rod and the heat fin assemblies in the length direction, wherein at least one of the outermost heat fin assemblies disposed on the two sides is separated at one point in the length direction and thus is spaced apart from each other so as to form an insertion space part into which a temperature sensor holder is inserted, and a temperature sensor module is disposed in the insertion space part between the heat rod and the temperature sensor holder so that the temperature sensor module is in contact with the heat rod or is in close proximity thereto with a minimal gap, thus allowing accurate and consistent measurement of temperature, and actions such as appropriate maintenance or automatic shutdown by a control unit when an abnormality such as overheating occurs in the PTC heater.

## Description

### Field of the Invention

The present invention relates to a PTC heater having a temperature sensor installed therein, and more specifically, to a PTC heater in which a temperature sensor is installed in direct contact with or in proximity to a heat rod, thereby enabling accurate and uniform temperature measurement.

### Background of the Related Art

In general, a heating device is installed in a vehicle to provide interior heating or to defog or defrost a front windshield of the vehicle.

Such a heating device uses coolant that flows around the engine after the engine starts, and therefore, it inevitably takes a relatively long time until the coolant is heated and the vehicle interior becomes warm.

Accordingly, heaters incorporating positive temperature coefficient (PTC) elements have been adopted for over a decade to enable rapid heating after ignition.

Meanwhile, in recently developed electric vehicles, since there is no separate engine or coolant system, the importance of PTC heaters, which can generate heat immediately, is increasing day by day.

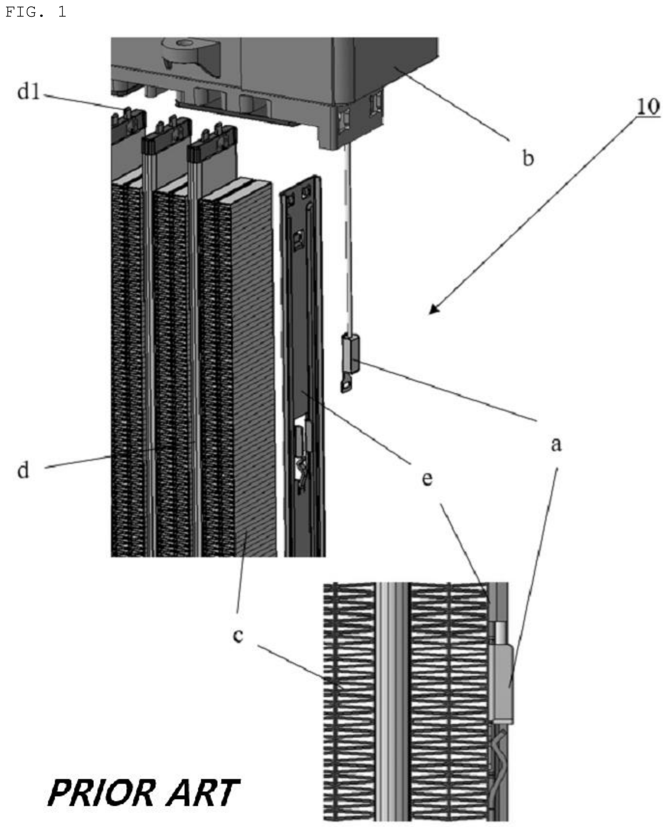

As illustrated in FIG. 1, a conventional PTC heater 10 is typically equipped with a temperature sensor a that detects abnormal conditions such as overheating by measuring temperature of the heat generated by a heat rod d, on which a PTC element (not shown) and electrodes d1 are mounted.

However, in the related art, the temperature sensor a is not in direct contact with the heat rod d, but is installed on heat fin assemblies c, which are relatively wide and disposed on both sides of the PTC heater 10, or on support frames e that support the heat fin assemblies c. As a result, it is difficult to accurately measure the temperature of the heat generated by the heat rod d, and the temperature measurements exhibit significant fluctuation, making it difficult for the control unit to appropriately control the system when overheating occurs.

That is, since the temperature sensor a is installed on the support frame e, which is spaced apart from the heat source, the heat rod d, by the heat fin assemblies c, it is difficult to obtain accurate temperature measurements, and the measurements fluctuate, making precise control difficult. Consequently, overheating of the PTC heater 10 may lead to deformation of surrounding structures such as the housing b, or cause a malfunction.

### Relatd Prior Art

Patent Document 1: Korean Patent No. 10-2442176 (granted on September 05, 2022)

### SUMMARY OF THE INVENTION

Accordingly, the present invention has been made in view of the above-mentioned problems occurring in the related art, and it is an object of the present invention to provide a PTC heater in which a temperature sensor is installed in direct contact with or in proximity to a heat rod, thereby enabling accurate and uniform temperature measurement, thereby enabling accurate and uniform temperature measurement and allowing for appropriate control and response when an abnormal condition such as overheating occurs in the PTC heater.

To accomplish the above-mentioned objects, according to the present invention,
there is provided a PTC heater having a temperature sensor installed therein, including:
at least one heat rod including a PTC element and electrodes;
a plurality of heat fin assemblies installed on both sides of the heat rod to transfer heat; and
a housing coupled to at least one end of the heat rod and the heat fin assemblies in the length direction,
wherein at least one of the outermost heat fin assemblies disposed on both sides is separated at a point in a longitudinal direction so as to be spaced apart from each other, thereby forming an insertion space part, a temperature sensor holder is fitted into the insertion space part, and a temperature sensor module is disposed between the heat rod and the temperature sensor holder within the insertion space part.

An insertion groove configured to accommodate the temperature sensor module is formed on one surface of the temperature sensor holder facing the heat rod.

The temperature sensor module includes a fitting protrusion extending toward the temperature sensor holder, and a fitting groove into which the fitting protrusion is inserted is formed on one surface of the temperature sensor holder adjacent to the insertion groove.

At one end of the temperature sensor holder in a thickness direction of the PTC heater, a guide groove which has an opening at an end thereof is formed to be laterally penetrated so that a communication and power line connected to the temperature sensor module is inserted, and a locking protrusion is formed at the same end to extend across the opening of the guide groove in a longitudinal direction of the heat rod.

An outer surface of the outermost heat fin assembly and an outer surface of the temperature sensor holder are covered and coupled by a support frame, coupling grooves are respectively formed on both sides of the support frame in a thickness direction of the PTC heater, and coupling protrusions configured to engage with the coupling grooves are respectively formed on the temperature sensor holder.

According to the present invention having the above-described configuration, the PTC heater includes: at least one heat rod including a PTC element and electrodes; a plurality of heat fin assemblies installed on both sides of the heat rod to transfer heat; and a housing coupled to at least one end of the heat rod and the heat fin assemblies in the length direction, wherein at least one of the outermost heat fin assemblies disposed on both sides is separated at a point in a longitudinal direction so as to be spaced apart from each other, thereby forming an insertion space part, a temperature sensor holder is fitted into the insertion space part, and a temperature sensor module is disposed between the heat rod and the temperature sensor holder within the insertion space part. Accordingly, since the temperature sensor module is positioned in contact with or in close proximity to the heat rod with a minimal gap, accurate and uniform temperature measurement becomes possible. Thus, when an abnormal condition such as overheating occurs in the PTC heater, actions such as automatic shutdown by the control unit, appropriate control of the discharge temperature passing through the PTC heater to a desired level through current adjustment, or proper maintenance can be performed.

In addition, according to the present invention, the insertion groove configured to accommodate the temperature sensor module is formed on one surface of the temperature sensor holder facing the heat rod, such that the temperature sensor module disposed in the insertion groove can detect only the heat generated from the heat rod without being affected by the temperature of other components, allowing for more accurate temperature measurement.

Furthermore, according to the present invention, the temperature sensor module includes the fitting protrusion extending toward the temperature sensor holder, and the fitting groove into which the fitting protrusion is inserted is formed on one surface of the temperature sensor holder adjacent to the insertion groove, such that when the temperature sensor holder is brought into proximity with the temperature sensor module, the fitting protrusion is naturally inserted into the fitting groove, thereby ensuring coupling between the components and preventing the temperature sensor module from becoming dislodged.

Moreover, according to the present invention, at one end of the temperature sensor holder in the thickness direction of the PTC heater, the guide groove which has the opening at an end thereof is formed to be laterally penetrated so that the communication and power line connected to the temperature sensor module is inserted, and the locking protrusion is formed at the same end to extend across the opening of the guide groove in the longitudinal direction of the heat rod, such that the communication and power line connected to the control unit housed in the housing is secured by the locking protrusion after being inserted into the guide groove, thus providing a robust and stable structure that prevents loosening or disconnection.

Additionally, according to the present invention, the outer surface of the outermost heat fin assembly and an outer surface of the temperature sensor holder are covered and coupled by the support frame, coupling grooves are respectively formed on both sides of the support frame in the thickness direction of the PTC heater, and coupling protrusions configured to engage with the coupling grooves are respectively formed on the temperature sensor holder, thus preventing relative movement between the support frame and the temperature sensor holder.

### BRIEF DESCRIPTION OF THE FIGURES

FIG. 1 is a perspective view of a PTC heater having a temperature sensor installed therein according to the conventional art.
FIG. 2 is a front perspective view of a PTC heater having a temperature sensor installed therein according to the present invention.
FIG. 3 is a partially exploded front perspective view of the PTC heater according to the present invention.
FIG. 4 is a perspective view illustrating a structure around a temperature sensor holder in FIG. 2.
FIG. 5 is an exploded perspective view of the temperature sensor holder in FIG. 4.
FIG. 6 is a rear perspective view of FIG. 5.
FIG. 7 is a perspective view showing a configuration of the temperature sensor holder in FIG. 5.
FIG. 8 is another perspective view showing a configuration of the temperature sensor holder in FIG. 5.
FIG. 9 is a perspective view illustrating a configuration in which temperature sensor modules are installed on both sides according to the present invention.

### DETAILED DESCRIPTION OF THE INVENTION

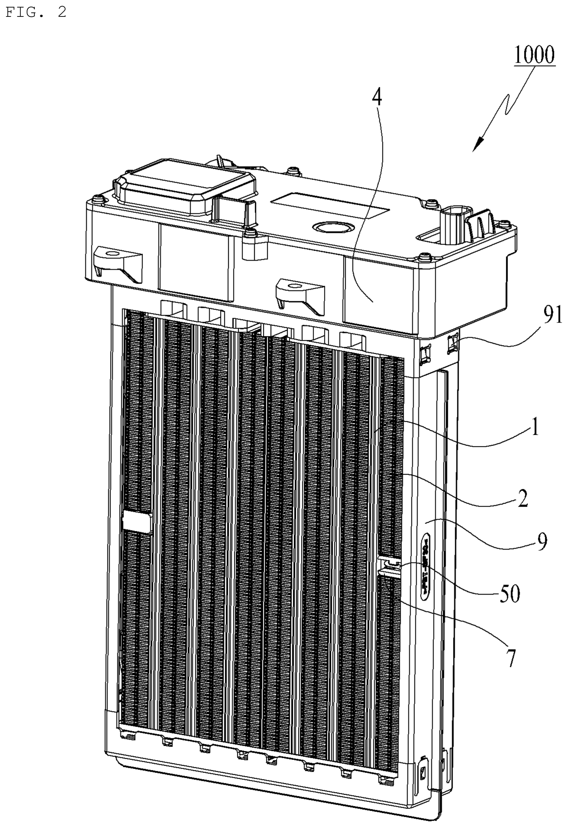

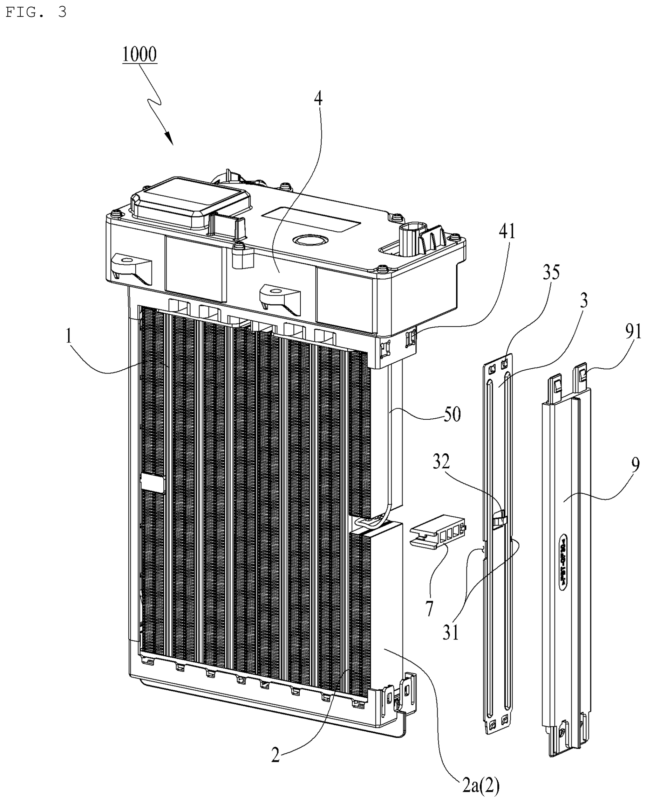

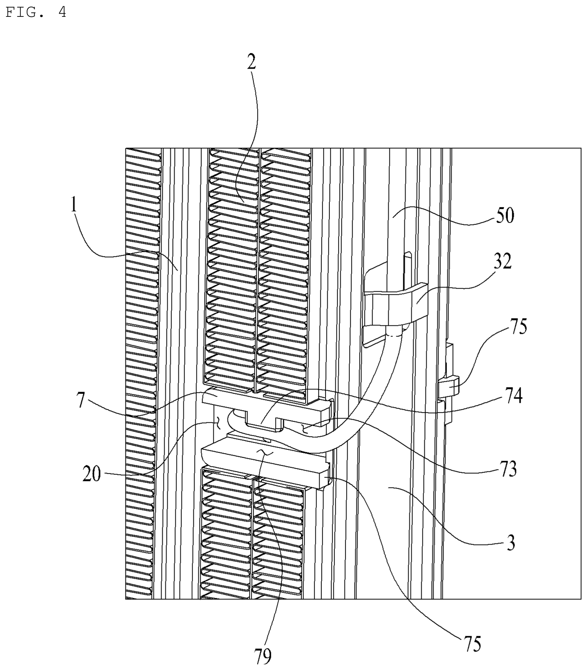

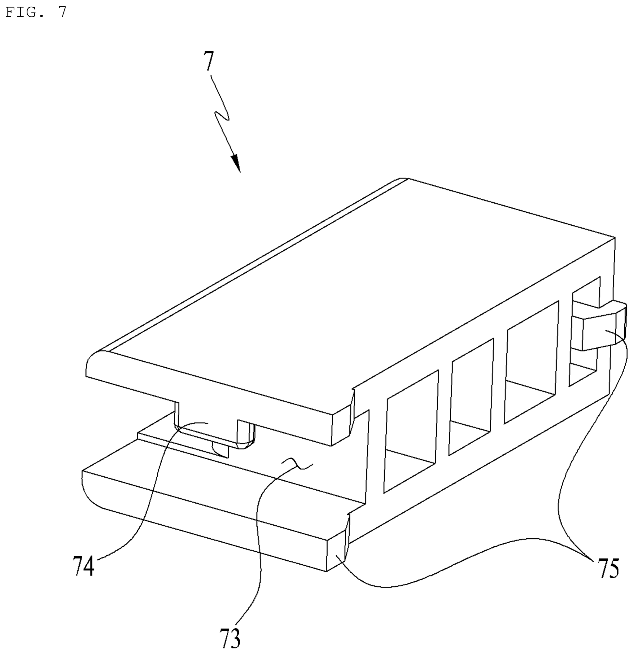

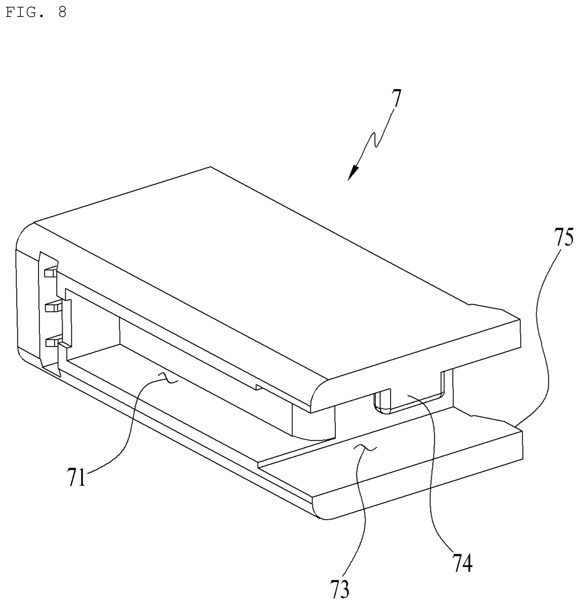

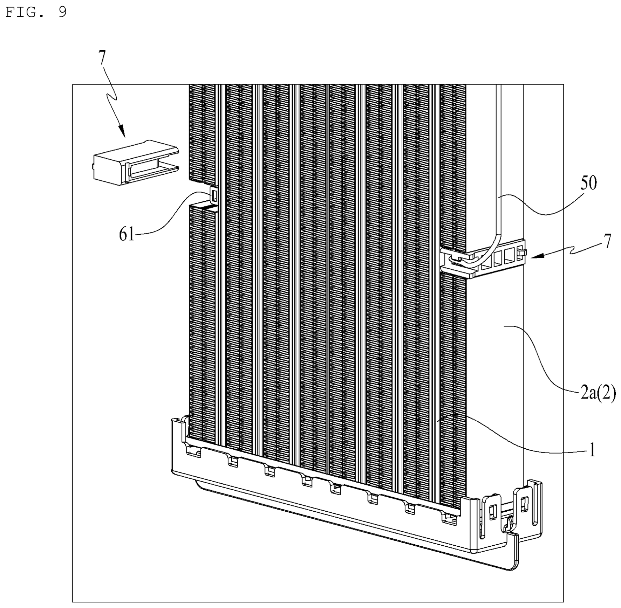

As illustrated in FIGS. 2 to 9, a PTC heater 1000 having a temperature sensor installed therein according to the present invention includes at least one heat rod 1 having a PTC element and electrodes (not shown); a plurality of heat fin assemblies 2 installed on both sides of each heat rod 1 to transfer heat; and a housing 4 coupled to at least one longitudinal end of the heat rod 1 and the heat fin assemblies 2.

Typically, the heat rod 1 generates heat via the PTC element and the electrodes, and the generated heat is transferred outward through a metal case having excellent conductivity such as aluminum. The heat rod may additionally include molding materials or insulating components.

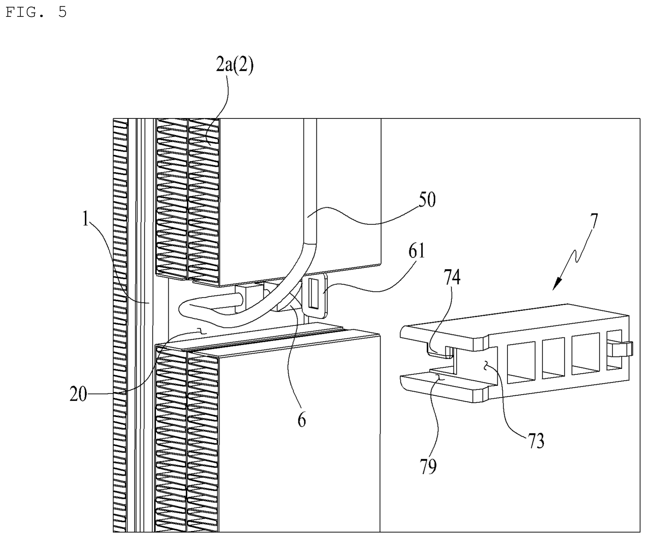

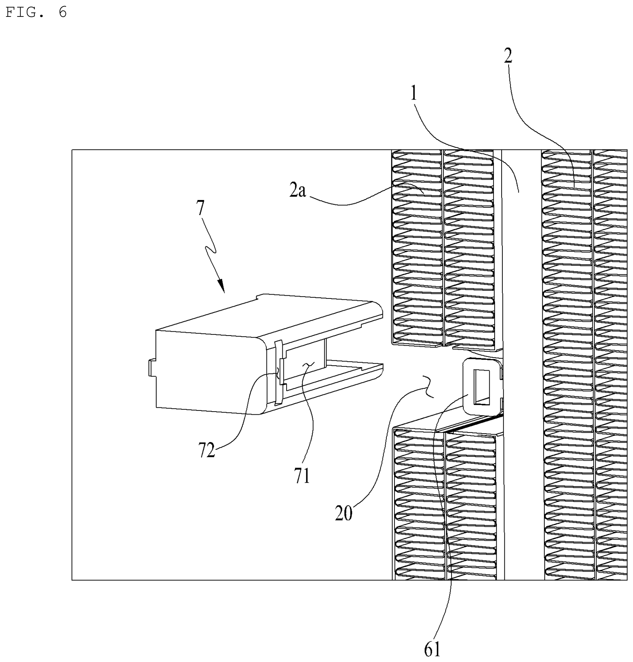

Particularly, as illustrated in FIGS. 5 and 6, at least one of the outermost heat fin assemblies 2a disposed on both sides is separated at a point in the longitudinal direction to form an insertion space part 20. A temperature sensor holder 7 is inserted into the insertion space part 20, and a temperature sensor module 6 is disposed between the heat rod 1 and the temperature sensor holder 7 within the insertion space part 20.

Accordingly, since the temperature sensor module 6 is positioned in contact with or in close proximity to the heat rod 1 with a minimal gap, accurate and uniform temperature measurement becomes possible. Thus, when an abnormal condition such as overheating occurs in the PTC heater 1000, actions such as automatic shutdown by the control unit, appropriate control of the discharge temperature passing through the PTC heater 1000 to a desired level through current adjustment, or proper maintenance can be performed.

The temperature sensor holder 7 can move the temperature sensor module 6 toward the heat rod 1, thereby allowing the temperature sensor module 6 to come as close as possible to or in contact with the heat rod 1.

As illustrated, an insertion groove 71 is preferably formed on the surface of the temperature sensor holder 7 facing the heat rod 1, so that the temperature sensor module 6 can be inserted therein.

The temperature sensor module 6 and the temperature sensor holder 7 may be inserted into the insertion space part 20 in a coupled state, or the temperature sensor module 6 may first be placed in the insertion space part 20, followed by coupling of the temperature sensor holder 7 to the temperature sensor module 6.

Although the material of the temperature sensor holder 7 is not particularly limited, the temperature sensor holder is preferably made of a high-performance plastic having high heat resistance and chemical resistance, such as polyphenylene sulfide (PPS).

Accordingly, the temperature sensor module 6 in the insertion groove 71 can detect only the heat generated from the heat rod 1 without being affected by the temperature of other components, allowing for more precise temperature measurement.

A fitting protrusion 61 extending toward the temperature sensor holder 7 is formed on the temperature sensor module 6, and a fitting groove 72 into which the fitting protrusion 61 is inserted may be formed in the temperature sensor holder 7.

With such a configuration, as the temperature sensor holder 7 is brought into proximity with the temperature sensor module 6, the fitting protrusion 61 is naturally inserted into the fitting groove 72, such that the temperature sensor module 6 and the temperature sensor holder 7 are naturally coupled with each other, thereby preventing the temperature sensor module 6 from becoming detached.

Specifically, the fitting groove 72 is formed adjacent to the insertion groove 71 on the surface of the temperature sensor holder 7 facing the heat rod 1 such that the temperature sensor holder 7 is laterally moved toward the insertion space part 20 to be coupled and the fitting protrusion 61 is inserted into the fitting groove 72. As a result, once the temperature sensor holder 7 is securely coupled to the insertion space part 20, the temperature sensor module 6 is reliably prevented from detaching from the temperature sensor holder 7.

That is, since the direction in which the temperature sensor module 6 may detach intersects with the direction in which the fitting protrusion 61 is coupled to the fitting groove 72, once the fitting protrusion 61 and the fitting groove 72 are coupled, detachment of the temperature sensor module 6 is prevented.

Meanwhile, at one end of the temperature sensor holder 7 in a thickness direction of the PTC heater 1000, a guide groove 73 which has an opening 79 at an end thereof is formed to be laterally penetrated so that a communication and power line 50 connected to the temperature sensor module 6 can be inserted. In addition, a locking protrusion 74 may be formed at the same end to extend across the opening 79 of the guide groove 73 in a longitudinal direction of the heat rod 1.

Accordingly, the communication and power line 50 connected to the control unit (not shown) housed in the housing 4 is inserted into the guide groove 73 and is secured by the locking protrusion 74, thereby preventing detachment and providing a stable and robust structure without shaking.

Furthermore, since the outer surface of the outermost heat fin assembly 2a and the outer surface of the temperature sensor holder 7 are covered and coupled by a support frame 3, detachment of the temperature sensor holder 7 is completely prevented.

Both ends of the support frame 3 may be coupled to protrusions (not shown) formed inside the housing 4 via locking holes 35.

In particular, coupling grooves 31 are respectively formed on both sides of the support frame 3 in the thickness direction of the PTC heater 1000, and coupling protrusions 75 are respectively formed on the temperature sensor holder 7 to engage with the coupling grooves 31, thus preventing relative movement between the support frame 3 and the temperature sensor holder 7.

At a position between the housing 4, to which the communication and power line 50 is connected, and the temperature sensor holder 7, a locking bent portion 32 protruding laterally is formed on the support frame 3. As the communication and power line 50 passes between the locking bent portion 32 and the support frame 3, the communication and power line 50 is coupled more securely without shaking.

The outer surface of the support frame 3 may be supported and protected by a side bar 9.

A fastening hole 41 may be formed in the housing 4, and a fastening protrusion 91 configured to be engaged with the fastening hole 41 may be formed on the side bar 9.

As described above, according to the present invention, since the temperature sensor module 6 is configured to read the temperature by directly contacting or closely approaching the heat source (i.e., the heat rod 1), it is possible to accurately measure the actual heating temperature of the heat rod 1. In addition, because the fluctuation range of the measured temperature is small, temperature control by the control unit becomes very easy.

Finally, with the configuration of the present invention, surface-limited temperature control of the PTC heater 1000 becomes easier, thereby preventing deformation of the housing 4 due to overheating, which is a problem observed in conventional products. Moreover, the present invention can control the discharge temperature passing through the PTC heater 1000 to reach a desired target temperature more reliably.

FIG. 10 illustrates a configuration in which the temperature sensor module 6 and the temperature sensor holder 7 are respectively installed on both sides of the PTC heater 1000.

The embodiments of the present invention are merely illustrative, and it will be understood by those skilled in the art that various modifications and equivalent embodiments are possible within the scope of the claims.

## Claims

1. A PTC heater having a temperature sensor installed therein, comprising:
at least one heat rod including a PTC element and electrodes;
a plurality of heat fin assemblies installed on both sides of the heat rod to transfer heat; and
a housing coupled to at least one end of the heat rod and the heat fin assemblies in the length direction,
wherein at least one of the outermost heat fin assemblies disposed on both sides is separated at a point in a longitudinal direction so as to be spaced apart from each other, thereby forming an insertion space part,
wherein a temperature sensor holder is fitted into the insertion space part, and
wherein a temperature sensor module is disposed between the heat rod and the temperature sensor holder within the insertion space part.

2. The PTC heater according to claim 1, wherein an insertion groove configured to accommodate the temperature sensor module is formed on one surface of the temperature sensor holder facing the heat rod.

3. The PTC heater according to claim 2, wherein the temperature sensor module includes a fitting protrusion extending toward the temperature sensor holder, and a fitting groove into which the fitting protrusion is inserted is formed on the one surface of the temperature sensor holder adjacent to the insertion groove.

4. The PTC heater according to claim 1, wherein, at one end of the temperature sensor holder in a thickness direction of the PTC heater, a guide groove which has an opening at an end thereof is formed to be laterally penetrated so that a communication and power line connected to the temperature sensor module is inserted, and a locking protrusion is formed at the same end to extend across the opening of the guide groove in a longitudinal direction of the heat rod.

5. The PTC heater according to any one of claims 1 to 4, wherein an outer surface of the outermost heat fin assembly and an outer surface of the temperature sensor holder are covered and coupled by a support frame, coupling grooves are respectively formed on both sides of the support frame in a thickness direction of the PTC heater, and coupling protrusions configured to engage with the coupling grooves are respectively formed on the temperature sensor holder.
